# EUROPEAN PATENT SPECIFICATION

(11) **EP 3 006 621 B1**
(45) Date of publication and mention of the grant of the patent: **08.01.2020**
(21) Application number: 14804931.5
(22) Date of filing: 28.05.2014
(51) Int. Cl.: D07B 1/16, C25D 7/06, D07B 1/06, B60C 9/00, C25D 5/48

(54) **METAL CORD AND RUBBER COMPOSITE-BODY**
METALLBAND UND KAUTSCHUKVERBUNDKÖRPER
CORPS COMPOSITE CAOUTCHOUC-CÂBLE MÉTALLIQUE

(30) Priority: 30.05.2013 JP 2013114197
(43) Date of publication of application: 13.04.2016
(73) Proprietor: Bridgestone Corporation, Tokyo 104-8340 (JP)
(72) Inventor: MUSHA Shinichi, Kodaira-shi Tokyo 187-8531 (JP); KANATOMI Yoshihiko, Kodaira-shi Tokyo 187-8531 (JP); YAMAGISHI Junichi, Kodaira-shi Tokyo 187-8531 (JP)
(74) Representative: Lang, Johannes
(86) International application number: PCT/JP2014/064136
(87) International publication number: WO 2014/192811

(56) References cited:
- WO-A1-2013/117249
- JP-A- 2009 091 691
- JP-A- 2010 280 928
- JP-A- 2011 179 147
- JP-A- 2012 012 625
- JP-A- 2012 012 684
- US-A- 4 189 332

## Description

### Technical Field

The present invention relates to a production method for a metal cord-rubber composite suited to rubber articles to which strength is required, such as tires, industrial belts and the like.

### Background Art

A steel cord-rubber composite prepared by coating a metal cord such as a steel cord and the like with a rubber composition has so far been used for rubber articles to which a strength is required, such as tires for automobiles, industrial belts, rubber crawlers and the like for the purpose of reinforcing rubbers to improve strength and durability thereof. In this regard, a metal cord has to be adhered stably and strongly to a rubber composition in order to allow the metal cord-rubber composite to exert a high reinforcing effect.

For example, in a pneumatic tire which is a representative example of the rubber articles, a rubber composite prepared by coating with a rubber, a steel cord prepared by twisting plural steel wires subjected to brass plating or comprising a single steel wire is applied to a belt and a carcass thereof to reinforce them mainly by the steel cord. In order to make practical use of a steel cord as a reinforcing material for tires, the steel cord concerned has to be adhered surely with a coating rubber therefor, and therefore a peripheral surface of a wire constituting the steel cord is plated with a brass (Cu, Zn).

That is, widely used is so-called direct vulcanization adhesion in which a metal cord such as a brass-plated steel cord and the like is coated with a rubber composition containing sulfur and in which they are adhered (adhered by forming a rubber metal adhesive layer (CuxS) and the like) at the same time as vulcanization of the above rubber composition. Various investigations have so far been made in order to enhance an adhesive property between the metal cord and the rubber in the above direct vulcanization adhesion.

For example, in order to vulcanize and mold a tire within a fixed time, quick adhesion of the cord with the rubber and a sufficiently high adhesive force provided by complete bonding thereof are required to be secured. That is, a so-called initial adhesive property is required, and therefore it is necessary to add a Co salt and a Ni salt as an adhesion accelerator to the rubber in a considerable proportion and blend it with sulfur in a high ratio.

However, if a rubber is blended with a Co salt, significant problems are involved in the physical properties such as rubber deterioration and a crack growth resistance in contrast with a rubber which is not blended with Co. Accordingly, various proposals have been made on metal cords such as wires to which rubbers are adhered as well as controlling the constitutions of rubber compositions.

Known are, for example, 1) a cord•rubber composite comprising a steel cord and a coating rubber for coating the same, wherein the steel cord described above is constituted of a thermally treated cord obtained by using a steel wire subjected to thermal treatment at a heating temperature of 400 to 800°C for a heating time of 30 to 250 seconds after plating, and the coating rubber described above is constituted of a rubber composition containing a moisture of 0.3 to 1.0 % in an unvulcanized state (refer to, for example, a patent document 1), and 2) a rubber-steel cord composite comprising a rubber composition and a steel cord, wherein the rubber composition is blended with an organic acid metal salt component which is constituted of at least one kind of an organic acid metal salt and which has a metal content mole ratio of 2/1 to 20/1 in nickel to molybdenum in an amount of 0.01 to 10 parts by weight in terms of a metal content based on 100 parts by weight of a rubber component, and the steel cord is plated with a brass having a copper content of 60 to 70 % by weight (refer to, for example, a patent document 2).

However, in the cord•rubber composite and the like described above in the patent documents 1 and 2, the problem of inhibiting rubber physical properties such as a rubber deterioration resistance and a crack growth resistance is brought about due to an increase in a physical and thermal load exerted on rubber articles such as tires, industrial belts and the like to which a strength is particularly required in recent years, and the existing situation is that they are intensely desired to be further improved and enhanced in an initial adhesive property, a hygrothermal deterioration resistance, a treat leaving property (an adhesive property after coating a metal cord such as a steel cord and the like with a coating rubber and leaving it (treat leaving)), and the like without causing the above problems.

### Prior Art Documents

### Patent documents

Patent document 1: JP-A 2004-306788 (claims, examples and the like)
Patent document 2: JP-A 2005-193793 (claims, examples and the like)

### Disclosure of the Invention

Attention is drawn to the publication of document WO-A-2013/117249, which is only relevant under Article 54(3) EPC. The document US-A-4189332 discloses a method according to a part of claim 1. The present invention intends to solve the problems on the conventional technologies described above, and an object thereof is to provide a metal cord-rubber composite which is excellent in an initial adhesive property, a hygrothermal deterioration property and a treat leaving property without causing the problem of inhibiting rubber physical properties such as a rubber deterioration resistance and a crack growth resistance and which is suited to reinforcing rubber articles requiring a strength, such as tires, industrial belts and the like, and a production method for the same.

In light of the problems on the conventional technologies described above, intense investigations repeated by the present inventors have resulted in finding that a metal cord-rubber composite and a production method for the same which meet the object described above are obtained by a metal cord-rubber composite prepared by coating a metal cord with a rubber composition, wherein a surface state of the metal cord is provided with a constitution having specific physical properties. Thus, they have come to complete the present invention.

That is, the present invention resides in the subject-matter of claim 1.

According to the present invention, provided are a metal cord-rubber composite which is excellent in an initial adhesive property, a water and oxygen deterioration resistance and an adhesive property after treat leaving, and a production method for the same.

### Mode for Carrying Out the Invention

The embodiment of the present invention shall specifically be explained below with reference to examples.

The metal cord-rubber composite obtained by the production method of the present invention is characterized by a metal cord-rubber composite prepared by coating a metal cord with a rubber composition, wherein an N atom on a surface of the metal cord accounts for 2 atomic % or more and 60 atomic % or less, and a Cu/Zn ratio is 1 or more and 4 or less.

### [Metal cord]

The metal cord used for the metal cord-rubber composite obtained by the production method of the present invention is prepared by twisting plural wires of a metal steel wire or comprises a single steel wire.

Also, the above metal wire has a brass-plated layer chosen from the viewpoints of an initial adhesive property with the rubber composition, a hygrothermal adhesive property and formation of a suitable rubber metal adhesive layer.

A brass plating composition of a bulk constituting the above brass-plated layer is preferably 40 to 80 % by mass of Cu (copper) and 20 to 60 % by mass of Zn (zinc), more preferably 55 to 70 % by mass of Cu and 30 to 45 % by mass of Zn from the viewpoints of steel cord processability and an adhesive property with the rubber.

A steel wire is given as the metal wire and shall be explained in further details. The steel wire is a linear metal comprising iron as a main component (a mass of iron based on a whole mass of the metal steel wire exceeds 50 % by mass). The above metal may contain metals other than the iron described above.

The steel wire has a wire diameter of preferably 0.1 to 5.5 mm, more preferably 0.15 to 5.26 mm from the viewpoints of workability and durability. In this connection, the wire diameter of the steel wire means the largest length between two points on a periphery in a cross-sectional form of the steel wire vertical to an axis line thereof. The cross-sectional form of the steel wire vertical to the axis line thereof shall not specifically be restricted and may be elliptical, rectangular, triangular, polygonal and the like, and in general, it is circular. When a steel cord which is a metal-made reinforcing cord prepared by twisting the above steel wires is used for a carcass and a belt of a tire, the cross-sectional form described above is preferably circular, and the wire diameter is preferably 0.1 to 0.5 mm. When it is used for a bead core of a tire, the cross-sectional form described above is preferably circular as well, and the wire diameter is preferably 1 to 1.5 mm. Also, the above metal wire has preferably a brass-plated layer having the composition described above on a surface thereof, and a thickness of the above plated layer shall not specifically be restricted and is, for example, usually 100 to 300 nm.

In the present invention, the metal cord comprising a steel cord can be obtained according to an ordinary method by twisting plural wires of a metal wire such as the steel wire subjected to the brass plating described above on a peripheral surface into, for example, a 1 × 3 structure, a 1 × 5 structure and the like.

The above metal cord suited to reinforcing rubber articles, such as a steel cord is preferably at least one selected from the group consisting of a belt cord, a carcass cord and a bead cord for a tire.

In the present invention, it is required that an N (nitrogen) atom on a surface of the metal cord accounts for 2 atomic % or more and 60 atomic % or less from the viewpoint of the treat leaving property and that a Cu/Zn ratio is 1 or more and 4 or less in terms of a mass. An N atom on the surface of the metal cord accounts for preferably 2.1 atomic % or more and 55.0 atomic % or less, and the Cu/Zn ratio is preferably 1.1 or more and 3.5 or less.

The effects of the present invention can sufficiently be obtained by controlling a proportion of an N (nitrogen) atom on the surface of the metal cord to 2 atomic % or more. If it is less than 2 atomic %, the treat leaving property is deteriorated, and if it exceeds 60 atomic %, the initial adhesive property with the rubber gets worse. Also, the effects of the present invention can sufficiently be obtained by controlling the Cu/Zn ratio to 1 or more. If it is less than 1, the initial adhesive property is not sufficiently exerted, and if it is 4 or less, the initial adhesive property is improved. If it exceeds 4, the hygrothermal deterioration resistance is not sufficiently exerted.

In the present invention, an N (nitrogen) atom on the surface of the metal cord described above can be controlled to 2 atomic % or more and 60 atomic % or less by, for example, suitably combining treatment by a triazole compound (rust preventive), to be specific, surface treatment such as bringing the surface into contact with an aqueous solution of a triazole compound. Also, the Cu/Zn ratio on the surface of the metal cord can be controlled to 1 or more and 4 or less by, for example, carrying out treatment in which a pH of an acid buffer solution and a concentration of a triazole aqueous solution are suitably combined. The metal cord having a higher Cu/Zn ratio can be obtained at a lower pH.

The acid buffer solution includes, for example, an acetic acid buffer solution, a phosphoric acid buffer solution, a citric acid buffer solution and the like each having a pH of 5.0 to 7.2, and it includes preferably an acetic acid buffer solution having a pH of 5.0 to 7.2. If the pH is less than 5.0, the Cu/Zn ratio cannot be controlled to 4 or less, and if the pH exceeds 7.2, the Cu/Zn ratio cannot be controlled to 1 or more. Surface treating time by the above buffer solution can be controlled to 0.5 to 20 seconds, for example, when the acetic acid buffer solution having a pH of 5.0 to 7.2 is used.

Also, the triazole aqueous solution is selected from 1,2,4-triazole, 1,2,3-triazole, 3-amino-1,2,4-triazole, 4-amino-1,2,4-triazole. A concentration of the above triazole aqueous solution is preferably 0.01 to 20 g/L, and the treating time can be, though varied depending on the concentration, 0.1 to 30 seconds.

In the present invention, the "surface" is a surface region up to a depth of 5 (nm) toward an inside in a radial direction of the metal wire such as a steel wire. An N atom and the Cu/Zn ratio on the surface of the metal cord described above are measured by measuring the surface of the metal cord before coated with the rubber composition after the metal cord is obtained and then subjected to, if necessary, cleaning treatment, drying and the like.

Also, in the present invention (including examples described later), an N atom on the surface of the metal cord is measured by measuring an N atom on the surface of the metal cord according to an X-ray photoelectron spectroscopy (XPS) method, and the Cu/Zn ratio is measured by measuring a Cu/Zn ratio on the surface of the metal cord according to the photoelectron spectroscopy described above.

### [Rubber composition for coating metal cord]

The rubber component of the rubber composition used for the coating rubber in the metal cord-rubber composite of the present invention shall not specifically be restricted and includes, for example, natural rubber, polybutadiene rubber, polyisoprene rubber, styrene-butadiene copolymer rubber, acrylonitrile-butadiene copolymer rubber, ethylene-propylene copolymer rubber, ethylene-propylene-diene terpolymer rubber, butyl rubber, halogenated butyl rubber, alkylated chlorosulfonated polyethylene rubber, isobutylene-isoprene copolymer rubber, polychloroprene rubber, and the like. The above rubber components may be used alone or in combination of two or more kinds thereof.

The rubber composition used may suitably be blended with, as well as the rubber component described above, components used usually in the rubber industry as long as the object of the present invention is not damaged. The other components include, for example, a vulcanizing agent such as sulfur and the like, a filler such as carbon black and the like, an oil such as process oils and the like, a vulcanization accelerator, an antioxidant, a softening agent, zinc oxide, and stearic acid, and the adhesion accelerator includes a cobalt compound such as a Co salt and the like.

The rubber composition used in the present invention can be produced by mixing the above respective components by an ordinary method and heating and extruding them.

### [Metal cord-rubber composite and production method for the same]

The metal cord-rubber composite of the present invention can be produced by subjecting the foregoing metal cord subjected to the respective surface treatments described above, if necessary, to washing treatment by an ordinary method and then passing through a step of adhering the above metal cord with the foregoing rubber composition for coating.

The metal cord-rubber composite can be produced by adhering the foregoing metal cord subjected to the respective surface treatments described above with the rubber composition, for example, subjecting the metal cord and the rubber composition to vulcanization adhesion under pressurizing and heating. The vulcanization conditions shall not specifically be restricted, and they are a pressure of preferably 2 MPa to 15 MPa, more preferably 2 MPa to 5 MPa, and a temperature of preferably 120 to 200°C, more preferably 130 to 170°C. The vulcanization time shall not specifically be restricted, and it is preferably 3 minutes to 60 hours.

The metal cord-rubber composite of the present invention shall not specifically be restricted as far as uses thereof are concerned, and it can be used widely for tires for cars, industrial belts such as dynamic transmission belts, conveyor belts and the like, various rubber products and parts such as rubber crawlers, hoses, rubber bearing bodies for base isolation, and the like.

The metal cord-rubber composite of the present invention can be applied particularly as reinforcing materials for tire members such as plys of tires (carcass ply, belt ply), bead members and the like. The tires obtained shall not specifically be restricted as long as the metal cord-rubber composite of the present invention is used for the same, and the publicly known constitutions of tires can be used as they are.

Plys to which the metal cord-rubber composite described above is applied is suitably used as a carcass ply and a belt ply of a tire, and the above metal cord-rubber composite is suitably used for a bead and the like of a tire. Similarly, the metal cord-rubber composite described above is suitably used for industrial belts such as dynamic transmission belts, conveyor belts and the like, rubber-made rubber crawlers mounted in a crawler driving equipment used for bulldozers and the like, hoses, rubber bearing bodies for base isolation, and the like. Since the above tires, industrial belts, rubber crawlers and the like are excellent in an adhesive strength between the rubber composition and the metal cord, they are hard to be peeled off, and therefore they are excellent in durability and provided with a long life even under a high load.

### EXAMPLES

The present invention shall specifically be explained below based on examples, but the present invention shall not be restricted to the following examples.

### Examples 1 to 22 and Comparative Examples 1 to 6

Steel wires (thickness of a plated layer: 0.2 *µ*m, wire diameter: 0.3 mm) subjected brass plating having compositions shown in Table 1 and Table 2 described later were twisted to prepare steel cords having a 1 × 3 structure. Next, the above cords were washed with a treatment liquid comprising treatment 1: an acetic acid buffer solution or a phosphoric acid treatment solution and treatment 2: a rust preventive (triazole compound) which are treatment methods shown below, and they were dried at 50°C for 1 minute. The above steel cords which finished the above washing treatment were used to measure an N amount (N amount on an outermost surface: atomic %) on the surface of the plated wire in the steel cord and a Cu/Zn ratio (Cu/Zn ratio on an outermost surface) by means of an X-ray photoelectron spectrometer (Quantera, manufactured by Ulvac-Phi Inc.). The results thereof are shown in Table 1 and Table 2.

The measurement conditions by the X-ray photoelectron spectroscopy are shown below.
X-ray source: monochromatic Al-K α ray
Measured region: 50 *µ*mφ
Measured peaks: C1s, O1s, N1s, P2p, Cu2p2/3, Zn2p2/3
Data processing: Multipak (manufactured by Ulvac-Phi Inc.) Quantitative determination: determined from a peak area obtained using a relative sensitivity coefficient method * Cu/Zn is a ratio of the determined value of Cu2p2/3 and Zn2p2/3

### [Treatment 1: treatment by an acetic acid buffer solution or a phosphoric acid treatment solution]

In the treatment carried out by the acetic acid buffer solution, a treatment solution in which 0.1N sodium acetate was controlled to pH shown in Table 1 and Table 2 by acetic acid was used to wash the steel cords prepared for a treating time of 10 seconds to subject them to surface treatment.

In the treatment carried out by the phosphoric acid treatment solution, the phosphoric acid treatment solution which was controlled to pH (concentration) shown in Table 2 was used to wash the steel cords prepared for a treating time of 10 seconds to subject them to surface treatment.

### [Treatment 2: treatment by triazole compound (rust preventive)]

In the treatment carried out by the triazole compound (rust preventive), triazole compound aqueous solutions which were controlled to the respective concentrations by using the respective triazole compounds shown in Table 1 and Table 2 were used to wash the steel cords prepared for a treating time of 10 seconds to subject them to surface treatment.

The steel cords which finished the washing treatments described above were used to evaluate an initial adhesive property, a water and oxygen deterioration property and a treat leaving property which evaluate respectively a cord/rubber adhesive property by the following methods using the rubber compositions having blend formulations shown in Table 1 and Table 2. Further, TF and a crack growth property of the rubbers after hygrothermally deteriorated were evaluated as rubber physical properties. The results thereof are shown in the following Table 1 and Table 2.

### Evaluation method of initial adhesive property:

The steel cords which were subjected to the washing treatment described above were arranged parallel at an interval of 12.5 mm, and the above steel cords were coated with a rubber composition from upper and lower sides and vulcanized at 160°C for 7 minutes to adhere the rubber composition and the steel cords. Thus, a metal cord-rubber composite in which the steel cords were buried in the rubber sheet having a thickness of 1 mm was obtained (the steel cords were arranged at an interval of 12.5 mm on the surface of the sheet in a central part in a thickness direction of the rubber sheet).

Then, the steel cords were pulled out from the respective samples immediately after vulcanized according to ASTM D 2229 to visually observe a coating rate of the rubber adhered to the steel cords and determine it at a grade of 0 to 100 % to set it as an indicator of an initial adhesive property. The results thereof were shown by an index in the following Table 1 and Table 2, wherein the value in Comparative Example 1 was set to 100. It is shown that the larger the index value is, the more excellent the initial adhesive property is.

### Evaluation method of hygrothermal deterioration property:

The steel cords which were subjected to the washing treatment described above were arranged parallel at an interval of 12.5 mm, and the above steel cords were coated with a rubber composition from upper and lower sides and vulcanized at 160°C for 20 minutes to adhere the rubber composition and the steel cords. Thus, a metal cord-rubber composite in which the steel cords were buried in the rubber sheet having a thickness of 1 mm was obtained (the steel cords were arranged at an interval of 12.5 mm on the surface of the sheet in a central part in a thickness direction of the rubber sheet).

The above metal cord-rubber composite was deteriorated under the atmosphere of 75°C and a relative humidity of 95 % for 7 days. Then, the steel cords were pulled out from the respective samples according to ASTM D 2229 to visually observe a coating rate of the rubber adhered to the steel cords and determine it at a grade of 0 to 100 % to set it as an indicator of a hygrothermal deterioration property. The results thereof were shown by an index in the following Table 1 and Table 2, wherein the value in Comparative Example 1 was set to 100. It is shown that the larger the index value is, the more excellent the hygrothermal deterioration property is.

### Evaluation method of treat leaving property:

A treat sample prepared by coating the steel cords which were subjected to the washing treatment described above with an unvulcanized rubber was left standing in the aerial atmosphere of a temperature of 45°C and a relative humidity of 85 % for 7 days. Then, after vulcanized at 160°C for 20 minutes, the metal cord-rubber composite thus obtained was used to peel off the steel cords from the rubber, and a rubber adhesion amount thereof was visually observed to evaluate a rubber adhesion level at a grade of 0 to 100 %. The results thereof were shown by an index in the following Table 1 and Table 2, wherein the value in Comparative Example 1 was set to 100. It is shown that the larger the numerical value is, the more excellent the adhesive property after treat leaving is.

### Evaluation method of TF after hygrothermal deterioration:

TF (deteriorated physical property of rubber) after hygrothermal deterioration was evaluated by vulcanizing an unvulcanized rubber at 160°C for 20 minutes, then deteriorating the vulcanized rubber at 100°C for 2 days (thermal deterioration condition), or at 70°C and a humidity of 100 % for 4 days (hygrothermal deterioration condition), and then subjecting to a tensile test according to JIS K 6251 : 2010 to thereby measure Eb (elongation (%) in breaking) and Tb (tensile strength (MPa)) to determine TF (toughness: Eb × Tb). The results thereof were shown by an index in the following Table 1 and Table 2, wherein the value in Comparative Example 1 was set to 100. It is shown that the larger the numerical value is, the better the rubber physical property (TF) is even after hygrothermal deterioration.

### Evaluation method of crack growth property of rubber:

The crack growth property was evaluated by carrying out a constant stress fatigue test for the respective samples by means of a fatigue testing machine manufactured by Ueshima Seisakusho Co., Ltd. to measure a frequency at which it was broken. The results thereof were shown by an index in the following Table 1 and Table 2, wherein the value in Comparative Example 1 was set to 100. It is shown that the larger the numerical value is, the more excellent the crack growth resistance is.

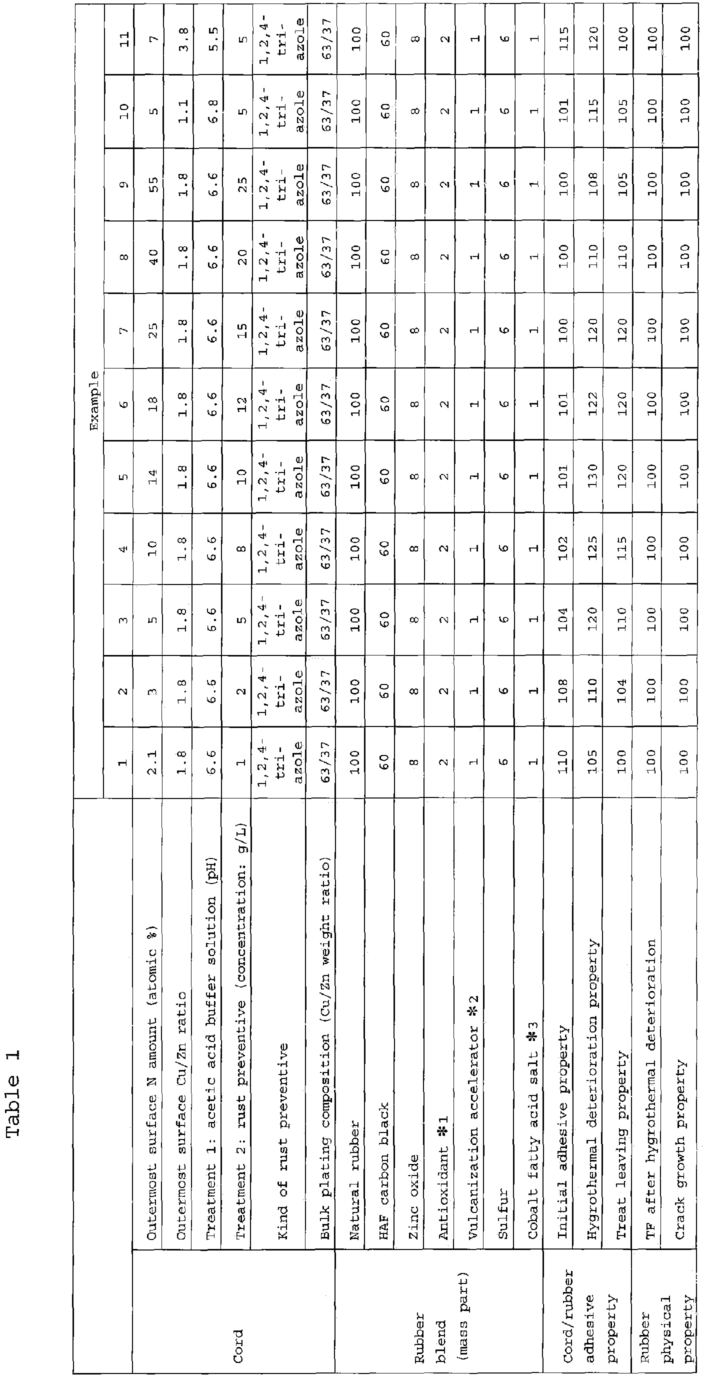

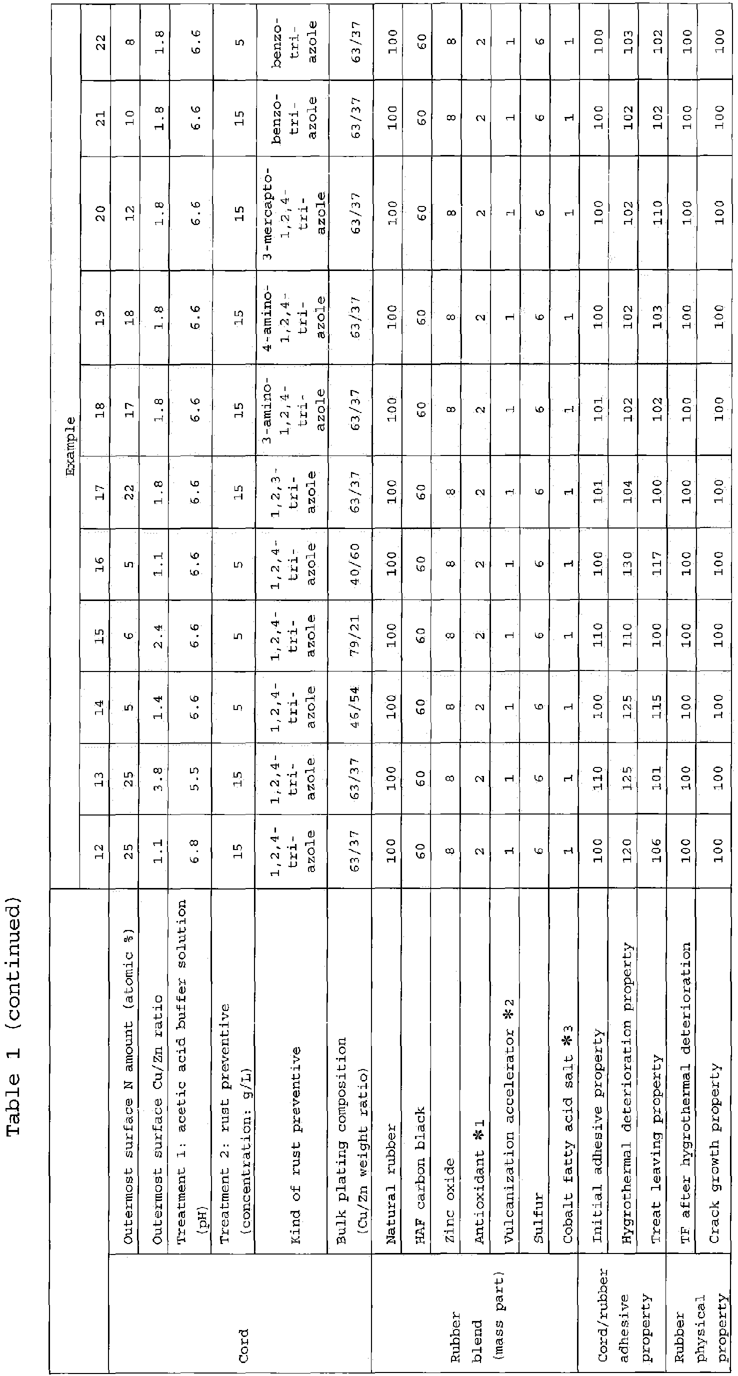

**Table 2**

| | | Comparative Example | | | | | |
|---|---|---|---|---|---|---|---|
| | | 1 | 2 | 3 | 4 | 5 | 6 |
| Cord | Outermost surface N amount (atomic %) | 1.5 | 1.5 | 65 | 15 | 12 | 25 |
| | Outermost surface Cu/Zn ratio | 0.5 | 1.8 | 1.8 | 4.5 | 4.5 | 4.5 |
| | Treatment 1: acetic acid buffer solution (pH) | - | 6.6 | 6.6 | - | - | - |
| | Treatment 1: phosphoric acid treatment solution (concentration: g/L) | - | - | - | 1 (pH 3.1) | 1 (pH 3.1) | 1 (pH 3.1) |
| | Treatment 2: rust preventive (concentration: g/L) | - | - | 30 | 15 | 5 | 15 |
| | Kind of rust preventive | - | - | 1,2,4-triazole | benzotriazole | tolyl triazole | 1,2,4-triazole |
| | Bulk plating composition (Cu/Zn weight ratio) | 63/37 | 63/37 | 63/37 | 63/37 | 63/37 | 63/37 |
| Rubber blend (mass part) | Natural rubber | 100 | 100 | 100 | 100 | 100 | 100 |
| | HAF carbon black | 60 | 60 | 60 | 60 | 60 | 60 |
| | Zinc oxide | 8 | 8 | 8 | 8 | 8 | 8 |
| | Antioxidant *1 | 2 | 2 | 2 | 2 | 2 | 2 |
| | Vulcanization accelerator *2 | 1 | 1 | 1 | 1 | 1 | 1 |
| | Sulfur | 6 | 6 | 6 | 6 | 6 | 6 |
| | Cobalt fatty acid salt *3 | 1 | 1 | 1 | 1 | 1 | 1 |
| Cord/rubber adhesive property | Initial adhesive property | 100 | 102 | 90 | 140 | 135 | 110 |
| | Hygrothermal deterioration property | 100 | 100 | 105 | 90 | 90 | 90 |
| | Treat leaving property | 100 | 90 | 100 | 105 | 105 | 80 |
| Rubber physical property | TF after hygrothermal deterioration | 100 | 100 | 100 | 100 | 100 | 100 |
| | Crack growth property | 100 | 100 | 100 | 100 | 100 | 100 |

| | | | | | | | |
|---|---|---|---|---|---|---|---|
| *1 to *2 in Table 1 and Table 2 described above show the followings. *1: Nocrac 6C, N-phenyl-N'-(1,3-dimethylbutyl)-p-phenylenediamine, manufactured by Ouchi Shinko Chemical Industrial Co., Ltd. *2: Nocceler DZ, N,N'-dicyclohexyl-2-benzothiazolylsulfeneamide, manufactured by Ouchi Shinko Chemical Industrial Co., Ltd. *3: Manobond C22.5, cobalt content: 22.5 % by mass, manufactured by OMG Co., Ltd. | | | | | | | |

As apparent from the results shown in Table 1 and Table 2 described above, the metal cord-rubber composites prepared in Examples 1 to 22 falling in the scope of the present invention are excellent in a cord/rubber adhesive property (an initial adhesive property, a hygrothermal deterioration property and a treat leaving property (an adhesive property after treat leaving)) without damaging the rubber physical properties (TF after hygrothermal deterioration and a crack growth property) as compared with the metal cord-rubber composites prepared in Comparative Examples 1 to 6 falling outside the scope of the present invention, and the effects of the present invention could be confirmed.

To specifically observe the examples, the metal cord-rubber composites in which a Cu/Zn ratio on a surface of a metal cord was fixed and in which an N atom amount was varied in the scope of the present invention were prepared in Examples 1 to 9; the metal cord-rubber composites in which a Cu/Zn ratio and an N atom amount on a surface of a metal cord were varied respectively in the scope of the present invention were prepared in Examples 10 to 13; and the metal cord-rubber composites in which a brass plating composition and the kind of the triazole compound were varied and in which a Cu/Zn ratio and an N atom amount on a surface of a metal cord fell in the scope of the present invention were prepared in Examples 14 to 22, and it could be confirmed that all the above metal cord-rubber composites could exert the effects of the present invention.

In contrast with this, to observe the comparative examples, the metal cord-rubber composites in which a Cu/Zn ratio on a surface of a metal cord fell outside the scope of the present invention were prepared in Comparative Examples 1 to 6. In the above cases, at least one of the initial adhesive property, the hygrothermal deterioration property and the treat leaving property (the adhesive property after treat leaving) in the cord/rubber adhesive property is inferior in terms of the performance, and it could be confirmed that they could not exert the effects of the present invention.

### INDUSTRIAL APPLICABILITY

A metal cord-rubber composite useful for various rubber products such as tires, industrial belts including dynamic transmission belts, conveyor belts and the like, and a production method for the same can be provided.

## Claims

1. A production method for a metal cord-rubber composite, wherein the metal cord-rubber composite is prepared by coating a metal cord with a rubber composition, wherein the metal cord comprises a single steel wire subjected to brass plating on a peripheral surface or is prepared by twisting plural wires of the steel wire, wherein the metal cord is subjected to surface treatment with a buffer solution of pH 5.0 to 7.2 and treatment with at least one triazole compound selected from 1,2,4-triazole, 1,2,3-triazole, 3-amino-1,2,4-triazole, and 4-amino-1,2,4-triazole, and wherein on a surface of the metal cord, which is a surface region up to a depth of 5 nm toward an inside in a radial direction, an N atom accounts for 2 atomic % or more and 60 atomic % or less, and a Cu/Zn ratio is 1 or more and 4 or less.

2. The production method for a metal cord-rubber composite as described in claim 1, wherein the composition of the brass plating is 40 to 80 % of Cu and 20 to 60 % of Zn.

## Patentansprüche

1. Herstellungsverfahren für einen Metallseil-Kautschuk-Verbundstoff, wobei der Metallseil-Kautschuk-Verbundstoff durch Beschichten eines Metallseils mit einer Kautschukzusammensetzung hergestellt wird, wobei das Metallseil einen einzelnen Stahldraht umfasst, der einer Messingbeschichtung auf einer Umfangsfläche ausgesetzt ist, oder durch Verdrehen mehrerer Drähte des Stahldrahts hergestellt wird, wobei das Metallseil einer Oberflächenbehandlung mit einer Pufferlösung von pH 5,0 bis 7,2 unterzogen wird und einer Behandlung mit mindestens einer Triazolverbindung, ausgewählt aus 1,2,4-Triazol, 1,2,3-Triazol, 3-Amino-1,2,4-Triazol und 4-Amino-1,2,4-Triazol, und wobei auf einer Oberfläche des Metallseils, die ein Oberflächenbereich bis zu einer Tiefe von 5 nm nach innen in radialer Richtung ist, ein N-Atom 2 Atom-% oder mehr und 60 Atom-% oder weniger ausmacht und ein Cu/Zn-Verhältnis 1 oder mehr und 4 oder weniger beträgt.

2. Herstellungsverfahren für einen Metallseil-Kautschuk-Verbundstoff wie in Anspruch 1 beschrieben, wobei die Zusammensetzung der Messingbeschichtung 40 bis 80 % Cu und 20 bis 60 % Zn beträgt.

## Revendications

1. Procédé de fabrication d'un composite cordon métallique-caoutchouc, le composite cordon métallique-caoutchouc étant préparé en revêtant un cordon métallique avec une composition de caoutchouc, lequel cordon métallique comprend un seul fil en acier soumis à un placage de laiton sur une surface périphérique ou est préparé en tordant plusieurs fils du fil d'acier, dans lequel le cordon métallique est soumis à un traitement de surface avec une solution tampon de pH allant de 5,0 à 7,2 et un traitement avec au moins un composé triazole choisi parmi les 1,2,4-triazole, 1,2,3-triazole, 3-amino-1,2,4-triazole, et 4-amino-1,2,4-triazole, et dans lequel sur une surface du cordon métallique, qui est une région de surface jusqu'à une profondeur de 5 nm vers un intérieur dans une direction radiale, un atome N représente 2 % atomiques ou plus et 60 % atomiques ou moins, et un rapport Cu/Zn est de 1 ou plus et 4 ou moins.

2. Procédé de fabrication d'un composite cordon métallique-caoutchouc tel que décrit dans la revendication 1, dans lequel la composition du placage de laiton est de 40 à 80 % de Cu et de 20 à 60 % de Zn.
